(19) Europäisches Patentamt
European Patent Office
Office européen des brevets

(11) EP 3 985 375 B1

(12) EUROPEAN PATENT SPECIFICATION

(45) Date of publication and mention of the grant of the patent:
**03.05.2023 Bulletin 2023/18**

(21) Application number: **21201718.0**

(22) Date of filing: **08.10.2021**

(51) International Patent Classification (IPC):
***G01M 3/24** (2006.01)*

(52) Cooperative Patent Classification (CPC):
**G01M 3/24**

# (54) SYSTEM AND METHOD FOR DETECTING AN OPENING OR TESTING TIGHTNESS OF AN ENCLOSURE

SYSTEM UND VERFAHREN ZUR DETEKTION EINER ÖFFNUNG ODER ZUR PRÜFUNG DER DICHTIGKEIT EINES GEHÄUSES

SYSTÈME ET PROCÉDÉ DE DÉTECTION D'UNE OUVERTURE OU DE TEST D'ÉTANCHÉITÉ D'UNE ENCEINTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2020 US 202017070329**

(43) Date of publication of application:
**20.04.2022 Bulletin 2022/16**

(73) Proprietor: **Distran Ltd**
**8005 Zürich (CH)**

(72) Inventors:
- **MENZER, Fritz**
  **8005 Zürich (CH)**
- **PERRODIN, Florian**
  **8005 Zürich (CH)**
- **BUSSET, Joël**
  **8005 Zürich (CH)**

(74) Representative: **Jacobs, Lambert**
**Inventrans BV**
**Overwegstraat 24**
**3740 Bilzen (BE)**

(56) References cited:
**US-A1- 2019 094 098**
**US-A1- 2019 261 108**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 985 375 B1

## Description

### Field of the invention

The present invention relates in general to the field of acoustic detection devices (also referred to as "acoustic cameras"), and systems comprising an acoustic detection device, e.g. a plant monitoring system, a surveillance system, a gas leak detection system.

### Background of the invention

The structural integrity of an enclosure sometimes needs to be checked or tested to ensure the enclosure is air-tight or water-tight. Enclosures such as shipping containers or automobiles may be checked for tightness, for example, to ensure that no rain water or debris will enter the enclosure. Another example is checking the air-tightness of a building to ensure that a fire protection system will work effectively so that the system will be able to deplete oxygen inside the building when activated.

A conventional technique is to place an ultrasound signal generator inside an enclosure and to search for ultrasound emanating from the enclosure using a specialized ultrasound detection device, usually having a single microphone. The operator then scans the entire surface of potential leakage areas to search for ultrasounds emanating from the enclosure. Such a conventional technique is disclosed in U.S. Patent No. 5,780,723 in the form of a sealing quality tester for testing the seal quality of an automobile, where an ultrasonic generator, which is located inside an automobile, produces ultrasonic waves which can be received by an ultrasonic receiver, which is located outside of the automobile. This conventional technique is time consuming and, in noisy environments, such as factories, ports, ships, logistics centers, etc., a high noise level in the environment may result in the inability to accurately detect leaks.

Furthermore, in accordance with such a conventional technique, when a single microphone is used to detect ultrasound emanating from an enclosure, determining the location of leaks depends significantly on the skill of the operator. When a leak is detected, the operator needs to be skilled in bringing the detection device's microphone near or pointing the detection device at the exact location of the leak. Once the location is determined, it needs to be documented, which is typically done manually, introducing yet another source of inaccuracy and potential errors.

Therefore, there is a need for a method and system to quickly and accurately determine the tightness of an enclosure which is robust also in noisy environments.

### Summary of the invention

Disclosed is a detection system and a method for checking the tightness of an enclosure, such as a container, a building or a vehicle, or the like, that detects leaks efficiently and precisely, even in noisy environments.

According to a first aspect, the present invention provides a detection system for determining a location of an opening of a surface (e.g. an opening of an enclosure), the detection system comprising: a) a transmitter device comprising at least one acoustic transmitter (e.g. one or more speakers) for generating at least one acoustic signal; b) a receiver device comprising: i) at least one optical camera for capturing image information; ii) a plurality of acoustic transducers (e.g. one or more microphones), each configured for receiving said at least one acoustic signal and for converting said signal into an electrical signal; iii) an electronic data processor connected to said at least one optical camera, and configured to receive said image information, and to generate an optical image based on the received image information; and connected to said plurality of acoustic transducers, and configured to receive said plurality of electrical signals, and to generate an acoustic image based on the received electrical signals; and configured for generating a composite image of said optical image and said acoustic image, wherein the composite image contains a visual representation of the position of the opening of said surface through which opening at least a portion of the acoustic signals have travelled from the transmitter device to the receiver device when the transmitter device is situated on one side of said surface, and the receiver device is situated on an opposite side of said surface.

The surface may for example be a relative thick and/or a relatively large wall. The wall may have a planar shape, or a non-planar shape.

The receiver device may be further configured for outputting or displaying said composite image, or for transmitting said composite image (e.g. via a wireless link).

It is an advantage that the detection system and method is less dependent on the skills of the operator than conventional techniques, and, in particular, provides visual information regarding the location of a leak that is independent of the operator.

In an embodiment, the detection system furthermore provides an estimate of the size of leaks (e.g. an estimate of the surface area of a leak).

In an embodiment, the filtered signals may be analysed to determine the size of the leak, and information regarding the size of the leak may be displayed on the display.

In an embodiment, the surface is a closed surface or an enclosure, and the detection system is a leak detection system for detecting a location of a leak of said enclosure, and wherein the composite image contains a visual representation of the position of the leak of said enclosure through which leak at least a portion of the acoustic signals have travelled from the transmitter device to the receiver device when the transmitter device is situated inside said enclosure, and the receiver device is situated outside of said enclosure, or vice versa.

The optical camera may be configured to generate an optical image that of at least a portion of the enclosure.

The optical image may be displayed together with the acoustic image on the display.

The acoustic camera and optical camera and the display may be integrated into a portable unit.

In an embodiment, the ultrasonic transducers and the optical camera may be integrated together for combined movement about the enclosure.

Preferably, at least the plurality of ultrasonic transducers and the optical camera have a fixed relative position and orientation, e.g. both fixedly mounted to a housing, or to a printed circuit board, for combined movement.

In an embodiment, the enclosure is one of a vehicle, a freight container, and a building.

In an embodiment, the detection system further comprises at least one display connected or connectable to the electronic data processor, and configured to display said composite image.

In an embodiment, the display is integrated in the receiver device, and wherein the receiver device is a portable unit.

In an embodiment, the acoustic signals are ultrasonic signals; and the acoustic transmitters are ultrasonic transmitters; and the acoustic transducers are ultrasonic transducers.

The acoustic transmitter may be configured to generate acoustic signals in the ultrasonic frequency range or in a range from 20 kHz to 800 kHz.

In an embodiment, the transmitter device is configured for generating said at least one acoustic signal so as to have one or more frequencies in the frequency range from 20 kHz to 800 kHz.

In an embodiment, the transmitter device is configured to generate an acoustic signal with a varying frequency sweeping through a subrange of 20 kHz to 800 kHz, from 40 kHz to 60 kHz, or from 100 kHz to 200 kHz, or from 200 kHz to 800 kHz, or sweeping at least through the frequency range from 20 kHz to 40 kHz, or sweeping at least through the frequency range from 40 kHz to 60 kHz, or sweeping at least through the frequency range from 25 kHz to 35 kHz. It is an advantage of using frequencies above 20 kHz, because they cannot be heard by human beings.

In an embodiment, the transmitter device is configured to generate an acoustic signal having a frequency spectrum with at least two different frequencies at the same time, or spanning a relatively wide frequency range.

In an embodiment, the transmitter device is configured to generate a broadband audio signal having frequencies spanning at least two octaves, or at least three octaves, or at least four octaves.

In an embodiment, the transmitted is configured to use a bat-like hyperbolic FM-sweep with a start frequency of about 100 kHz and a stop frequency of about 20 kHz. The amplitude may be modulated by a hamming window to prevent transient effects in the transducers and analog filters.

In an embodiment, the acoustic image of the leak is displayed in real-time or quasi real-time.

In an embodiment, at least the acoustic image, and optionally also the optical image, and the composite image is dynamically updated at a frequency of at least 2 Hz, e.g. at a frequency in the range from 2 Hz to 100 Hz, e.g. at a frequency of about 5 Hz, or at about 15 Hz, or at about 20 Hz, or at about 25 Hz, or at about 30 Hz, or at about 60 Hz, or at about 75 Hz.

If the frequency is at least 15 Hz or at least 25 Hz, one could say that the leak is displayed in real-time or quasi real time.

The acoustic transmitter transmits signals according to a protocol comprising at least one of a frequency hopping protocol, a coded pulse signal protocol, a multi-frequency signalling protocol and a pure tone signalling protocol, and a filter, which matches the protocol implemented by the transmitter, may be applied to the signals received from the acoustic camera.

In an embodiment, the transmitter device is configured for transmitting said acoustic signals according to at least one predefined protocol selected from the group consisting of: a frequency hopping protocol, a coded pulse signal protocol, a multi-frequency signalling protocol and a pure tone signalling protocol; and the electronic data processor of the receiver device is further configured for filtering the electric signals obtained from the plurality of acoustic transducers using a filter characteristic that matches or corresponds to the protocol applied by the transmitter device.

The protocol may be a predefined protocol, e.g. hardcoded.

In an embodiment at least two (acoustic) protocols are implemented in the transmitter and receiver device, and one of these (acoustic) protocols is selected. The transmitter and receiver device may exchange information to select the protocol, or the protocol may be selected via a user interface of the respective devices.

In an embodiment, the transmitter device and the receiver device are configured to transmit and receive acoustic signals according to at least one of a frequency hopping protocol, a coded signal protocol, a pulse coded signal protocol and a band-pass filtering protocol.

The transmitter device further comprises a first RF transceiver, and the receiver device further comprises a second RF transceiver, and the transmitter device and the receiver device are configured for communicating (e.g. exchanging) information in order to use a particular signal protocol in both the transmitter device and the receiver device.

It is an advantage of using an RF signal, because it travels at a much higher speed than an audio signal, hence, is very well suitable for synchronization purposes. The RF signal may for example be WiFi, or Bluetooth, or Zigbee.

By using an RF signal, the transmitter device and receiver device can communicate, allowing also other features, such as dynamic selection of the audio protocol from a list of at least two audio protocols.

In an embodiment, the system may include a first wireless transceiver operatively coupled with the electronic data processor and a second wireless transceiver operatively coupled with the array of ultrasonic transducers, the first and second wireless transceiver wirelessly may communicate information to match a signal protocol of the ultrasonic transmitter to a signal protocol of the ultrasonic transducers.

The signal protocol is or allows a synchronization protocol to determine time-of-flight or distance parameters to estimate the size of the leak.

In an embodiment, the size of the opening (e.g. leak) is calculated based on one or more of: (i) the distance between the transmitter device and the surface, (ii) the distance between the receiver device and the surface, (iii) the distance between the receiver device and the transmitter device. The signal generated by the transmitter device may have a predefined (e.g. known) signal amplitude at one or more frequencies.

In an embodiment, the shape of the enclosure is predefined (e.g. the hull of a car), and the position(s) of the acoustic transmitter(s), e.g. speaker(s) and the position(s) of the acoustic transducers e.g. microphone(s) relative to the hull is also predefined, and the size of the opening is determined using a look-up table which is generated during a calibration test with various opening sizes.

In an embodiment, the leak is expressed in litres per time unit, e.g. litres per minute, or litres per hour. This is especially useful when testing enclosures for storing a fluid under pressure, such as e.g. a pressure vessel.

In an embodiment, the total distance between the transmitter device and the receiver device is determined based on the time-of-flight of the acoustic signal, which can be determined for example by synchronizing the transmitter device and the receiver device, and by subtracting the time of arrival of an acoustic signal at the receiver device and the time of transmission of said acoustic signal at the transmitter device.

In an embodiment, the electronic data processor is further configured for determine a size of the leak based on the filtered signals; and the electronic data processor is further configured for displaying the determined size of the leak, or a value or signal derived therefrom.

In an embodiment, the size of the leakage may be converted into graphical information which is superimposed or overlaid with the composite image. Alternatively, the receiver device may comprise a second display, e.g. a small LCD display, or a 7-segment display or the like, which may be dedicated for outputting alphanumerical information, e.g. said size of the leak.

In an embodiment, the size of the leak is compared to a threshold value, and depending on the outcome of the comparison, one or more light emitting components may be activated. For example, in an embodiment the size of the leak is compared to a threshold value, and if the size is smaller than the threshold, a green LED is activated; and if the size is larger than the threshold, a red LED is activated.

In an embodiment, the enclosure may be conveyed past the electro-acoustic transducers which are disposed in a fixed arrangement.

In an embodiment, the detection system further comprises a transport line (e.g. a conveyer belt) configured for moving a plurality of objects having a surface that needs to be tested for an opening (or an enclosure that needs to be tested for a leak); wherein a transmitter device is configured for being positioned inside one of said object; and wherein the plurality of acoustic transducers are arranged in a stationary manner.

The transducers may, for example, be mounted in a fixed arrangement having a U-shape with three legs, two side-legs arranged next to the conveyer belt, on opposite sides thereof, and one upper leg arranged above the conveyer belt.

In an embodiment, the transmitter device comprises a plurality of ribbon tweeters disposed on edges of a regular polyhedron.

In an embodiment, the transmitter device comprises a plurality of of individual speakers configured for generating independent acoustic signals.

In an embodiment, the transmitter device further comprises at least one acoustic transducer configured for measuring an amplitude of the transmitted signal, and the transmitter device is further configured for transmitting this amplitude to the receiver device via the first and second RF transceiver.

According to a second aspect, the present invention also provide a method of determining a location of an opening of a surface (e.g. an opening of an enclosure), the method comprising the following steps: a) providing a transmitter device comprising at least one acoustic transmitter for generating at least one acoustic signal; b) providing a receiver device comprising: i) at least one optical camera; ii) a plurality of acoustic transducers, each configured for receiving said at least one acoustic signal and for converting said signal into an electrical signal; iii) an electronic data processor connected to said at least one optical camera, and connected to said plurality of acoustic transducers; c) positioning the transmitter device on one side of the surface (e.g. inside the enclosure, or outside of the enclosure), and generating at least one acoustic signal (e.g. from within the enclosure) using said at least one acoustic transmitter; d) disposing the receiver device on an opposite side of the surface (e.g. outside of the enclosure, or inside of the enclosure), and capturing image information of at least a portion of the surface (e.g. an outside portion of the enclosure) using the optical camera, and receiving electrical signals from the plurality of transducers; and generating an acoustic image based on the received electrical signals; and generating a composite image of said optical image and said acoustic image, thereby generating an visual representation of the position of the opening of said surface (e.g. leak of said enclosure) through which opening at least a portion of the acoustic signals have travelled from the transmitter device to the receiver device.

In an embodiment, there is provided a method for testing an enclosure for leaks comprising the steps: transmitting ultrasonic signals from within the enclosure using at least one ultrasonic transmitter disposed within the enclosure; receiving ultrasonic signals from the ultrasonic transmitter emitted through a leak in the enclosure using an array of ultrasonic transducers disposed outside of the enclosure, the ultrasonic transducers receiving ultrasonic signals and converting the ultrasonic signals to electrical signals; processing the received ultrasonic signals to generate an ultrasonic image representative of the ultrasonic signals received through a leak in the enclosure; and displaying the ultrasonic image on a display.

In an embodiment, the surface is a closed surface or an enclosure, and the method is a method of detecting a location of a leak of said enclosure.

In an embodiment, the method further comprises the step of showing the composite image on a display, thereby showing the position of the opening of the surface (e.g. the position of the leak of said enclosure).

In an embodiment, the method may further comprise: analysing the received acoustic signals to determine the size of the leak, and optionally displaying information representative of the size of the leak.

In an embodiment, the transmitter device generates said at least one acoustic signal in step c) according to a coding protocol, and the receiver device filters the electrical signals in step d) based on the coding protocol.

In an embodiment the method further comprises: moving the enclosure by means of a transport line (e.g. a conveyer belt) past a stationary object comprising said plurality of acoustic transducers spaced apart, at fixed locations from each other; and step d) comprises receiving the electrical signals using these acoustic transducers.

In an embodiment the method further comprises: i) receiving acoustic (e.g. ultrasonic) signals using the plurality of (e.g. array of) acoustic (e.g. ultrasonic) transducers from an environment outside of the enclosure in which the plurality (e.g. array) of acoustic (e.g. ultrasonic) transducers are disposed; ii) applying a coding protocol to the acoustic (e.g. ultrasonic) signals transmitted by the acoustic (e.g. ultrasonic) transmitter based upon the acoustic (e.g. ultrasonic) signals received from the environment; and iii) applying a filtering protocol corresponding to the coding protocol to the signals received from the acoustic (e.g. ultrasonic) transducers.

The detection system may be utilized to determine if there is a leak in a vehicle, a freight container or a building. In addition, if a leak is found, the system may determine to location of the leak. In addition, the apparatus may determine the size of the leak.

In an embodiment, the system may utilize a synchronization protocol to determine time-of-flight or distance parameters to estimate the size of the leak.

In an embodiment, the ultrasonic transmitter may be comprised of a plurality of individual speakers generating independent ultrasonic signals.

In an embodiment, the array of ultrasonic transducers may be comprised of a plurality of spaced apart ultrasonic transducers disposed at fixed locations outside of the enclosure, and the method may include the step of conveying the enclosure past the plurality of spaced apart ultrasonic transducers.

In an embodiment, the method may include the steps of: receiving ultrasonic signals using the array of ultrasonic transducers from an environment outside of the enclosure where the array of ultrasonic transducers is disposed; applying a coding protocol to the ultrasonic signals transmitted by the ultrasonic transmitter based upon the ultrasonic signals received from the environment; and applying a filtering protocol corresponding to the coding protocol to the signals received from the ultrasonic transducers. For example, signal from the array of ultrasonic transducers may be analysed to determine the spectrum of the noise in the environment, and a pure tone signalling protocol may be selected, the frequency at which the environment is the most quiet. Alternatively, a multi-frequency signalling protocol may be selected with frequencies chosen such as to minimize both the impact of environment noise and the risk of sound being attenuated due to the shape and material of the enclosure.

## Brief description of the drawings

In disclosure is explained in detail below in connection with various illustrated in the drawings, in which:

- **FIG. 1** is a view illustrating an embodiment being used to check for leaks in a shipping container;
- **FIG. 2** illustrates an embodiment implemented with a robotic arm;
- **FIG. 3** illustrates an embodiment implemented with a conveyor arrangement;
- **FIG. 4** illustrates another embodiment implemented with a conveyor arrangement;
- **FIG. 5** is a view illustrating an embodiment being used to check for leaks in a building;
- **FIG. 6** is a view illustrating an embodiment implemented with a drone being used to check for leaks in a building;
- **FIG. 7** illustrates an embodiment implemented with a hard hat and augmented reality glasses;
- **FIG. 8** illustrates an embodiment of a signal generator with ribbon tweeters;
- **FIG. 9** illustrates an embodiment of a signal generator in the shape of a regular icosahedron with ribbon tweeters;

**FIG. 10** illustrates an embodiment of a signal generator with ribbon tweeters arranged on a truncated icosahedron;

**FIG. 11** illustrates an embodiment of a signal generator in the shape of a half-sphere;

**FIG. 12** illustrates an embodiment of display showing the location and size of a leak detected in a vehicle;

**FIG. 13** illustrates an embodiment of a display showing the location of a leak detected in a shipping container;

**FIG. 14** illustrates an embodiment of a display showing several views of a vehicle and the location on the views of where a leak has been detected;

**FIG. 15** is a schematic diagram of an embodiment of the system for detecting a leak;

**FIG. 16** is a schematic diagram of another embodiment of the system for detecting a leak;

**FIG. 17** is a flow diagram that illustrates operation of the emitter according to an embodiment;

**FIG. 18** is a flow diagram that illustrates operation of the emitter according to another embodiment; and

**FIG. 19** is a schematic diagram that illustrates acoustic signal processing according to an embodiment.

## Detailed description of illustrative embodiments

The present invention is directed to a system and method of detecting an opening in a surface, e.g. for detection a leak of an enclosure. Embodiments are explained in more detail below with reference to the drawings.

The present invention will be mainly explained for a system configured for detecting the position of a leak of an enclosure, for ease of the description. But the present invention is not limited thereto, and also works for detecting the position of an opening in a surface, e.g. a wall of a building.

**FIG. 1** is a view illustrating an embodiment of a detection system 100 being used to check for leaks in a shipping container 101. FIG. 1 shows an enclosure 101, such as a shipping container, with a signal generator 102 placed inside. An operator 103 holds an acoustic camera 104 equipped with electro-acoustic transducers 105 and an optical camera 106. The signal generator 102 includes one or more sound emitters, such as loudspeakers or ribbon tweeters, and the acoustic camera 104 comprises multiple transducers capable of converting sound pressure and/or particle velocity into electrical signals. The transducers may be arranged in a pattern suitable for source localization and/or acoustic imaging (e.g. by means of delay-and-sum beamforming). Examples of such patterns are a rectangular grid, a random pattern, or a Fibonacci sequence spiral pattern (like the distribution of seeds on a sunflower).

In an alternative embodiment, the signal generator may be placed outside of the enclosure and the receiving transducer array may be placed inside of the enclosure. In this embodiment, the receiving transducer array receives signals through a leak which were generated by the signal generator.

In an embodiment, the signal generator repeatedly emits ultrasonic coded pulse signals. By applying, at the receiver, to each signal received by the transducer array, a filter designed to selectively enhance the emitted coded pulse signals from the signal generator, the sensitivity of the system with respect to leaks can be increased, especially in noisy environments. In one implementation, the filter's impulse response could be defined as the time-reversed coded pulse signal, and in another implementation, an optimized matched filter could be designed. Whenever an emitted coded pulse signal reaches a transducer in the receiver, the filtered transducer's signal will show a local maximum. By applying an acoustic imaging technique on the filtered signals from all transducers in the receiving transducer array, the location of leaks in the enclosure can be readily determined. In this regard, such an arrangement for the transducer array may sometimes be considered to be an acoustic camera. An acoustic camera is a device having at least a receiving transducer array and associated signal processing hardware and software capable of producing acoustic images. In some embodiments, the signal processing hardware and software may be part of the transducer array, and in other embodiments, such processing hardware and software may be provided separately by a system to which is transducer array signals are supplied. In another embodiment, the acoustic camera may be provided with an optical camera that captures optical images that can be used to create a composite image, where an acoustic image and an optical image are combined, and may be displayed together.

An acoustic imaging technique can consist of delay-and-sum beamforming in every direction specified by a matrix of directions arranged in a regular fashion (similar to the look directions of pixels of an optical camera) and may derive an intensity value for each direction. An acoustic image is obtained by creating a matrix of intensity values with the same size as the matrix of directions. Each intensity value is related to the energy of a signal obtained by beamforming (beam formed signal) in the direction specified by the direction in the corresponding element of the matrix of directions. For example, the intensity value can be obtained by computing the root-mean-square value of the beam formed signal. The matrix of intensities can be interpreted as a greyscale image. Alternatively, the matrix of intensities can be interpreted as a colour image by applying a colour map.

The times at which the local maxima caused by pulse signals emitted by the signal generator occur are detected and the acoustic imaging technique is only applied to a short time frame around the maxima (for example 10 ms around each maximum). Thus, by keeping only signals around maxima, the signal-to-noise ratio can be further improved.

**FIG. 2** illustrates an example embodiment where the acoustic camera 104 is mounted on a robotic arm 202. In this arrangement, the robotic arm may be remotely operated or programmed to operate in a substantially automatic mode to check for tightness. Such an arrangement may be advantageous in an environment that may be hazardous (i.e., risk or radiation, or poor lighting or air quality) or difficult to access for a human operator.

**FIG. 3** illustrates another example embodiment of a detection system 300 where the acoustic camera 104 is disposed on a fixed pole 302, and the system checks the tightness of a vehicle 303 containing a signal generator that is moving along a conveyor belt 304. This arrangement may be used in a manufacturing or assembly line to automatically check the tightness of a vehicle.

**FIG. 4** illustrates an embodiment of a detection system 400 for checking the tightness of a vehicle in a manufacturing or assembly line. This system may also be used at the entrance of a car-wash, for example. The acoustic camera consists of a plurality of microphones 105 disposed along a gate-like structure 402 under which a vehicle 303 containing a signal generator is moved by a conveyor belt 304. In this embodiment, which may be substantially or completely automated, the acoustic camera itself may be sufficient and an optical camera may not be necessary because a human operator may not be involved. Alternatively, an optical camera could also be included so to provide visual information regarding a leak that may be stored and subsequently reviewed by a human operator.

**FIG. 5** illustrates another embodiment of a detection system 500 where a signal generator 102 is placed inside a building 502 and an operator 103 holds an acoustic camera 104 including an optical camera 106 to check the tightness of the building structure. Ultrasound signals emitted from the signal generator 102 may be transmitted through a faulty window frame 506 which is received by the acoustic camera 104. This arrangement may be used in connection with an application to check the air tightness of a building, such as in connection with fire a protection system that operates to deplete the oxygen inside the building.

FIG. 5 also illustrates that the system and method of the present invention can be used for detecting a weak spot in the isolation of a window of a building.

**FIG. 6** illustrates another embodiment of a detection system 600 where a signal generator 102 is placed inside a building 502 and a drone 603 is equipped with an acoustic camera 104 comprising also an optical camera 106 held by a vibration-absorbing payload mount 606. Ultrasound signals emitted from the signal generator 102 may be transmitted through a faulty roof window 607 and are received by the acoustic camera 104. The drone 603 may also be equipped with a first-person view (FPV) camera 608 and a system to wirelessly transmit information regarding the received ultrasound signals and the optical signal on a real time basis.

**FIG. 7** illustrates another embodiment where the acoustic camera 104 comprises microphones 105 placed at the surface of a hard hat 703, either integrated with the hard hat 703 or attached to the hard hat by a harness or other mechanism, and where acoustic images are displayed within augmented reality glasses 704 worn by the operator 103. This arrangement allows to overlay the acoustic images with the real world from the operator's point of view. In this embodiment, the acoustic camera does not need to comprise an optical camera. Such an arrangement may also include a system for recording or wirelessly transmitting the received transducer signals and/or optical signals from an (optional) optical camera.

In embodiments of the present invention, the emitted coded pulse signals may be audible or ultrasonic, ranging from about 20 kHz to about a few hundred kHz or even up to 800 kHz. While operation outside of this range may be possible, it would encounter challenges relating to absorption of the signal by air or attenuation such that detection would be difficult to achieve, even at short distances of less than a meter. The emitted coded pulse signals may cover a wide frequency range, for example by having a continuously non-zero spectrum between 20 kHz and 150 kHz. Alternatively, the emitted coded pulse signals could comprise a plurality of distinct frequencies, for example between 4 and 10 distinct frequencies between 20 kHz and 150 kHz.

In embodiments of the present invention, the signal generator may be operated to emit a plurality of different frequencies. In such an arrangement, the system may operate effectively even though some frequencies may interfere destructively or may be totally absorbed (by the enclosure, or due to the leak geometry).

The emitted coded pulse signals may consist of multiple band-limited signals at different frequencies, emitted in a pre-determined sequence, and the filter applied to the sound receiving transducer array may be designed to selectively enhance the corresponding received signals by implementing a band-pass filter that changes its center frequency over time, matched to the emitted coded pulse signals. Alternatively, a plurality of band-pass filters may be applied to the transducer signals concurrently, such that the detection is made only when the filtered signals show local maxima in the order corresponding to the coded pulse signal.

The signal generator may generate an ultrasound emission which is as omni-directional as possible so that every part of an enclosure is exposed to ultrasound and that all leaks in the enclosure can be found, especially in the case where the signal generator is placed near the center of an enclosure. When a signal generator is placed near a wall, the floor, or the ceiling of an enclosure, its directivity pattern may, for example, cover only a half-space.

Since it may be technically difficult to build an ultrasound emitter that is omni-directional or covering a half-space, the signal generator may comprise multiple emitters with overlapping emission patterns.

**FIG. 11** illustrates an a signal generator 102 according to an embodiment, comprising a plurality of loudspeakers 1102 arranged on a half-sphere, covering a half-space. Because ultrasonic loudspeakers often have a limited bandwidth (e.g. centered on 40 kHz), wide-band ribbon tweeters may be employed. Because ribbon tweeters are often rectangular in shape, the ribbon tweeters may be arranged on the edges of a regular polyhedron. For example, **FIG. 9** illustrates an arrangement where the signal generator 102 is in the shape of a regular icosahedron and comprises a plurality of ribbon tweeters 802 disposed on the edges.

As an example of another embodiment, **FIG. 8** illustrates a signal generator 102 with three ribbon tweeters 802 arranged in a three-faced pyramid shape. The signal generator 102 is placed on the floor 803 of an enclosure 101.

Another embodiment is illustrated in **FIG. 10** where a signal generator 102 includes a plurality of ribbon tweeters 802 arranged on the edges of a regular icosahedron. In another embodiment, **FIG. 10** illustrates a signal generator 102 including a plurality of ribbon tweeters 802 arranged on the edges of a truncated icosahedron.

According to an embodiment, to avoid destructive interferences between the emitters, the individual emitters of the signal generator may emit uncorrelated signals (e.g. Kasami codes). For large enclosures or enclosures with complex shapes, multiple emitter devices can be used to cover the entire enclosure. In such an arrangement, the signals of the plurality of emitter devices may be operated so their signals are uncorrelated from each other.

The signal generator may be operated to produce continuous signals or coded pulse signals. Examples of continuous signals are sine waves, sums of sine waves, or white noise. Examples of coded pulse signals are sine wave bursts, linear or logarithmic chirps, Kasami codes, Gold codes (or any coded sequence with that have good cross-correlation values approaching the Welch lower bound). In an embodiment, the coded pulse signals can be shorter than the whole leak search campaign and may be repeated, such as every 0.5 seconds. The transmitter and receiver may be synchronized, for example, with a clock synchronization algorithm prior to the measurement such as NTP, IEEE 1588 (PTP), or using GPS. Such synchronization allows the system to determine the distance the sound has travelled and may help, in cases where the geometry of the enclosure is complex, to understand the leakage path of the sound, and therefore the path that a leaking fluid, e.g. rainwater, would take.

If the length of the path from the signal generator to the transducer array is known (e.g. by applying the aforementioned timing-based technique), the amplitudes of the cross-correlation between the coded pulse signal and the transducer signals will provide information about the size of the hole. This information can help an operator to prioritize the leak fixing process, e.g. the operator may decide to fix the biggest leaks first.

The following formula may be used to estimate the size A of the hole or opening:

$$A = k * C / D$$

where C is the amplitude of the corresponding peak of the cross correlation between the coded pulse signal and a transducer signal, D is the distance from the transmitter to the receiver and A is the area of the hole in the enclosure. The factor k depends on the coded pulse signal, the acoustic gain of the signal generator, and the nature of the wall of the enclosure (e.g. sheet metal vs. double brick walls with insulation material between). If k cannot be determined precisely, this formula may be used to provide a biased estimate of A that can still be used to compare the relative sizes of different leaks in the same enclosure, under the condition that the wall material surrounding all the leaks is the same. The estimate of the leak size A can be further improved by classical signal processing techniques (i.e., using averaging, median filters, etc.). This estimate may be determined in real-time and presented on the display.

In an embodiment, an acoustic image (obtained, for example, by delay and sum beam forming) may be overlaid onto an optical image obtained by an optical camera, resulting in a composite image that can provide a visual indication of the location of a leak. The optical camera may be placed close to the center of the transducer array to avoid parallax problems. Such an arrangement, where a transducer array and an optical camera produces a composite image, may provide a precise visualization of the leakage areas. The acoustic and optical image processing and compositing may be performed in real-time by a portable receiver device so that operators in the field can find quickly the location of the leaks. The composite images may also be stored as an operator-independent visual proof of the location of leaks, e.g. for documentation purposes or for quality control purposes.

**FIG. 12** illustrates a display 1201 from the system connected in FIG. 3, which shows a composite image comprised of an optical image 1202 of an enclosure captured by the optical camera, and an acoustic image computed from received transducer signals recorded while the optical image was taken. In this example, the composite image shows that the enclosure, in this case a vehicle, has a leak at one of its doors. Overlaid on the optical image is an acoustic image, which consists of a yellow zone 1203 and a red zone 1204 around the location of a leak 1205 on a door of the car. In an on-screen display 1206, an estimate of the leak area may also be displayed.

A signal generator disposed inside the vehicle emits an ultrasonic signal which, when there is a leak, emanates from the vehicle at the location of the leak and is captured by the receiving transducer array. An acoustic image is calculated, which has a maximum for the direction at which the leak is located relative to the transducer array. The intensity values of the acoustic image may be presented by a grayscale or may be converted into colours using a colour map which maps very high intensity values to red, slightly lower values to yellow and very low values to a fully transparent colour. The composite image obtained by overlaying the optical image with the acoustic image provides a useful visual indication where a leak occurs.

FIG. 12 also illustrates that the system and method of the present invention can be used for detecting a weak spot in the isolation of a door of a vehicle.

In another example, **FIG. 13** illustrates an image displayed on a display unit 1201 which may be a handheld or portable display disposed with the receiving transducer array 104 and the optical camera 106 as illustrated in FIG. 1. The on-screen image 1201 shows an optical image 1202 of the enclosure 101, such as a shipping container, overlaid by an acoustic image, which consists of a yellow zone 1203 and a red zone 1204 around the location of a leak 1205 on the enclosure.

In another example, **FIG. 14** illustrates an image displayed on a display unit connected to the system shown in FIG. 4. The on-screen image 1401 shows a plurality of synthetic optical images 1402 of the vehicle 303 reconstructed for different angles. Superimposed on the display of the synthetic optical images 1402 are markers 1403 around the locations where leaks have been detected.

**FIG. 15** shows a schematic diagram of an embodiment of a tightness testing system 1500 with independent operation of the transmitting and receiving devices. The system includes a signal generator 102 having a signal generating electronic circuit 1501 and loudspeakers 1102 emitting sound waves 1503, which is placed inside an enclosure 101 with a leak 1505, from which sound waves 1506 can emanate and are picked up by the acoustic camera 104 having microphones 105 whose signals are processed by a signal processor 1509 in order to be converted into an acoustic image and to be sent to the graphics processing unit 1511 via the system bus 1510. Furthermore, the acoustic camera 104 may include an optical camera 106 having a lens 1514 and an image sensor 1515, which is connected via an image processing unit 1516 to the system bus 1510. The graphics processing unit 1511 overlays the optical image from the camera with the previously calculated acoustic image (typically with some degree of transparency), and displays the composite image on the display 1201. The system bus 1510 connects also a system processor 1518, a memory 1519, and storage 1520 to the other components.

**FIG. 16** shows a schematic of another embodiment of a tightness testing system 1600 with radio remote control functionality. The system includes a signal generator 102 having a signal generating electronic circuit 1501, a radio antenna 1603 and loudspeakers 1102 emitting sound waves 1503, which is placed inside an enclosure 101 with a leak 1505, from which sound waves 1506 can emanate and are picked up by the acoustic camera 104 comprising a radio antenna 1602 connected to wireless module 1601, and microphones 105 whose signals are processed by a signal processor 1509 in order to be converted into an acoustic image and to be sent to the graphics processing unit 1511 via the system bus 1510. Furthermore, the acoustic camera 104 may include an optical camera 106 having a lens 1514 and an image sensor 1515, which is connected via an image processing unit 1516 to the system bus 1510. The graphics processing unit 1511 overlays the optical image from the camera with the previously calculated acoustic image (typically with some degree of transparency), and displays the composite image on the display 1201. The system bus 1510 connects also a system processor 1518, a memory 1519, and storage 1520 to the other components. The acoustic camera 104 can send a signal via its radio antenna 1602 to the signal generator 102, which receives this signal via its radio antenna 1603 and adjusts the output signal accordingly. In an embodiment of the invention, the signal generator 102 can transmit information via its radio antenna 1603 back to the receiving transducer array. In an embodiment of the invention, the signal processor 1509 of the acoustic camera 104 autonomously selects a suitable signal by analysing the audio signals received from the microphones 105.

**FIG. 17** shows a flowchart 1700 of the operation of the signal generator 101 in the case of independent operation of the transmitting and receiving devices. In step 1710, upon start-up of the signal generator, the user is prompted to select a signal type (e.g. sinusoid at 40 kHz frequency, different types of coded pulses, frequency hopping sequences, etc.), which, in step 1720, causes the signal generator to emit a signal of the selected type. At the end of each repetition of the signal, the signal generator checks, in step 1730, if any user input (e.g. a button press) is available. If not, the previously emitted signal is repeated until user input is available. If, in step 1730, any user input is available, the process continue to step 1740 which determines if the user input is identified as a shutdown request (e.g. a press on a "on/off" button). If, in step 1740, the user input was identified as a shutdown request, the process continues to step 1750 and the signal generator shuts down. Otherwise, the process returns from step 1740 to step 1710, where it will start again with the prompt to select a signal type.

**FIG. 18** shows a flowchart 1800 of the operation of the signal generator 101 in the case where a receiver (e.g. the acoustic camera 104) wirelessly controls the signal generator. In step 1810, upon start-up, the signal generator waits for a wireless connection from the receiver. When a connections has been established, the signal generator waits for a command in step 1820. If, in step 1820, the command was a shutdown command, the signal generator shuts down. Otherwise, in step 1820, if the command was a signal command (e.g. a command specifying a predefined signal type, or a command describing an arbitrary signal, possibly as a sequence of sample values), the process continues to step 1830 where the signal generator will emit this signal and send back timing information (e.g. when the signal ended) to the receiver and terminates the wireless connection in step 1840. Thereafter, the signal generator starts again in step 1810 with waiting for a wireless connection in step. In an alternative embodiment, the signal generator and the receiver may implement a protocol where the wireless connection is kept alive as long as messages are being exchanged (e.g. with a timeout after which the connection is terminated).

**FIG. 19** shows a schematic diagram of an embodiment of the acoustic signal processing in the receiving transducer array. The signals 1902 coming from the microphones 105 are convolved 1904 with the matched filter 1903. The resulting signals 1905 are supplied to an acoustic imaging processor 1907 (e.g. performing beamforming in multiple directions), and also into separate peak detectors 1906 whose output is used by an acoustic imaging processor in order to process only the signal around the peaks (improves signal-to-noise ratio). The acoustic imaging processor may send an acoustic image 1908 to a graphics processor 1909 which may overlay the acoustic image with an optical image.

Expressed in simple terms, one may say that the present invention discloses (inter alia) a method and system for checking an enclosure for leaks. An ultrasonic signal generator on one side of the enclosure emits ultrasonic signals. An array of ultrasonic transducers on the other side of the enclosure receives ultrasonic signals from the ultrasonic signal generator through a leak, and produces an acoustic image. An optical camera generates an optical image that may be combined with the acoustic image to display the location of a leak in the enclosure. An estimate of the leak size may be calculated and displayed together with the acoustic image.

## Claims

**1.** A detection system (100, 300, 400; 500; 600; 1500; 1600) for determining a location of an opening of a surface, the detection system comprising:

a) a transmitter device (102) comprising at least one acoustic transmitter for generating at least one acoustic signal;

b) a receiver device (104) comprising:

i) at least one optical camera for capturing image information;

ii) a plurality of acoustic transducers, each configured for receiving said at least one acoustic signal and for converting said signal into an electrical signal;

iii) an electronic data processor connected to said at least one optical camera, and configured to receive said image information, and to generate an optical image based on the received image information;

and connected to said plurality of acoustic transducers, and configured to receive said plurality of electrical signals, and to generate an acoustic image based on the received electrical signals;

and configured for generating a composite image of said optical image and said acoustic image, wherein the composite image contains a visual representation of the position of the opening of said surface through which opening at least a portion of the acoustic signals have travelled from the transmitter device to the receiver device when the transmitter device is situated on one side of said surface, and the receiver device is situated on an opposite side of said surface;

**characterized in that:**

the transmitter device and the receiver device are configured to transmit and receive acoustic signals according to at least one of a frequency hopping protocol, a coded signal protocol, a pulse coded signal protocol and a band-pass filtering protocol;

the transmitter device further comprises a first radio-frequency, RF, transceiver;

the receiver device further comprises a second RF transceiver; and the transmitter device and the receiver device are configured for communicating information in order to use a predetermined signal protocol in both the transmitter device and the receiver device, wherein said signal protocol is a synchronization protocol used to determine time-of-flight or distance parameters to estimate the size of the leak.

**2.** A detection system according to claim 1, further comprising at least one display connected or connectable to the electronic data processor, and configured to display said composite image.

**3.** A detection system according to claim 2, wherein the display is integrated in the receiver device, and wherein the receiver device is a portable unit.

**4.** A detection system according to any of the previous claims,

wherein the acoustic transmitters are ultrasonic transmitters; and

wherein the acoustic signals are ultrasonic signals; and
wherein the acoustic transducers are ultrasonic transducers.

**5.** A detection system according to any of the previous claims,
wherein the transmitter device is configured for generating said at least one acoustic signal so as to have one or more frequencies in the frequency range from 20 kHz to 800 kHz.

**6.** A detection system according to any of the previous claims,
wherein the acoustic image, and optionally also the optical image, is dynamically updated at a frequency of at least 2 Hz.

**7.** A detection system according to any of the previous claims,

wherein the transmitter device is configured for transmitting said acoustic signals according to at least one predefined protocol selected from the group consisting of: a frequency hopping protocol, a coded pulse signal protocol, a multi-frequency signalling protocol and a pure tone signalling protocol;
and wherein the electronic data processor of the receiver device is further configured for filtering the electric signals obtained from the plurality of acoustic transducers using a filter characteristic that matches or corresponds to the protocol applied by the transmitter device.

**8.** A detection system according to any of the previous claims,

wherein the electronic data processor is further configured for determine a size of the leak based on the filtered signals; and
wherein the electronic data processor is further configured for displaying the determined size of the leak, or a value or signal derived therefrom.

**9.** A detection system according to any of the previous claims,

further comprising a transport line configured for moving a plurality of objects having a surface that needs to be tested for an opening;
wherein a transmitter device is configured for being positioned inside one of said object;and
wherein the plurality of acoustic transducers are arranged in a stationary manner.

**10.** A detection system according to any of the previous claims,

wherein the transmitter device comprises a plurality of ribbon tweeters disposed on edges of a regular polyhedron;
or wherein the transmitter device comprises a plurality of of individual speakers configured for generating independent acoustic signals.

**11.** A method of determining a location of an opening of a surface, the method comprising the following steps:

a) providing a transmitter device comprising at least one acoustic transmitter for generating at least one acoustic signal and a first radio-frequency transceiver;
b) providing a receiver device comprising:

i) at least one optical camera;
ii) a plurality of acoustic transducers, each configured for receiving said at least one acoustic signal and for converting said signal into an electrical signal;
iii) an electronic data processor connected to said at least one optical camera, and connected to said plurality of acoustic transducers; and
iv) a second RF transceiver;

c) positioning the transmitter device on one side of the surface, and generating at least one acoustic signal using said at least one acoustic transmitter;
d) disposing the receiver device on an opposite side of the surface, and capturing image information of at least a portion of the surface using the optical camera, and receiving electrical signals from the plurality of transducers; and generating an acoustic image based on the received electrical signals; and generating a composite image of said optical image and said acoustic image,

thereby generating an visual representation of the position of the opening of said surface through which opening at least a portion of the acoustic signals have travelled from the transmitter device to the receiver device;
wherein information is communicated between the transmitter device and the receiver device in order to use a predetermined signal protocol in both the transmitter device and the receiver device, wherein said signal protocol is a synchronization protocol used to determine time-of-flight or distance parameters to estimate the size of the leak.

**12.** A method according to claim 11,
further comprising the step of showing the composite image on a display, thereby showing the position of the opening of the surface.

## Patentansprüche

1. Detektionssystem (100, 300, 400; 500; 600; 1500; 1600) zum Bestimmen einer Stelle einer Öffnung einer Oberfläche, wobei das Detektionssystem Folgendes umfasst:

   a) eine Sendervorrichtung (102), die mindestens einen akustischen Sender zum Erzeugen mindestens eines akustischen Signals umfasst;
   b) eine Empfängervorrichtung (104), die Folgendes umfasst:

      i) mindestens eine optische Kamera zum Erfassen von Bildinformationen;
      ii) eine Vielzahl von akustischen Wandlern, von der jeder zum Empfangen des mindestens einen akustischen Signals und zum Umwandeln des Signals in ein elektrisches Signal konfiguriert ist;
      iii) einen elektronischen Datenprozessor, der mit der mindestens einen optischen Kamera verbunden und dazu konfiguriert ist, die Bildinformationen zu empfangen und ein optisches Bild basierend auf den empfangenen Bildinformationen zu erzeugen;

         und mit der Vielzahl von akustischen Wandlern verbunden und dazu konfiguriert ist, die Vielzahl von elektrischen Signalen zu empfangen und ein akustisches Bild basierend auf den empfangenen elektrischen Signalen zu erzeugen;
         und konfiguriert zum Erzeugen eines zusammengesetzten Bildes aus dem optischen Bild und dem akustischen Bild ist, wobei das zusammengesetzte Bild eine visuelle Darstellung der Position der Öffnung der Oberfläche enthält, durch die sich mindestens ein Teil der akustischen Signale von der Sendervorrichtung zu der Empfängervorrichtung bewegt hat, wenn die Sendervorrichtung an einer Seite der Oberfläche gelegen ist und die Empfängervorrichtung an einer gegenüberliegenden Seite der Oberfläche gelegen ist;

   **dadurch gekennzeichnet, dass:**

   die Sendervorrichtung und die Empfängervorrichtung dazu konfiguriert sind, akustische Signale gemäß mindestens einem von einem Frequenzsprungprotokoll, einem codierten Signalprotokoll, einem pulscodierten Signalprotokoll und einem Bandpassfilterprotokoll zu senden und zu empfangen;
   die Sendervorrichtung ferner einen ersten Funkfrequenz (radio frequency - RF)-Sendeempfänger umfasst;
   die Empfängervorrichtung ferner einen zweiten RF-Sendeempfänger umfasst; und
   die Sendervorrichtung und die Empfängervorrichtung zum Kommunizieren von Informationen konfiguriert sind, um ein vorbestimmtes Signalprotokoll sowohl in der Sendervorrichtung als auch in der Empfängervorrichtung zu verwenden, wobei das Signalprotokoll ein Synchronisationsprotokoll ist, das zum Bestimmen von Laufzeit- oder Entfernungsparametern verwendet wird, um die Größe des Lecks zu schätzen.

2. Detektionssystem nach Anspruch 1, ferner umfassend mindestens eine Anzeige, die mit dem elektronischen Datenprozessor verbunden oder verbindbar und dazu konfiguriert ist, das zusammengesetzte Bild anzuzeigen.

3. Detektionssystem nach Anspruch 2, wobei die Anzeige in die Empfängervorrichtung integriert ist und wobei die Empfängervorrichtung eine tragbare Einheit ist.

4. Detektionssystem nach einem der vorstehenden Ansprüche,

   wobei die akustischen Sender Ultraschallsender sind; und
   wobei die akustischen Signale Ultraschallsignale sind; und
   wobei die akustischen Wandler Ultraschallwandler sind.

5. Detektionssystem nach einem der vorstehenden Ansprüche,
   wobei die Sendervorrichtung zum Erzeugen des mindestens einen akustischen Signals konfiguriert ist, damit es eine oder mehrere Frequenzen im Frequenzbereich von 20 kHz bis 800 kHz aufweist.

6. Detektionssystem nach einem der vorstehenden Ansprüche,
   wobei das akustische Bild und optional auch das optische Bild mit einer Frequenz von mindestens 2 Hz dynamisch aktualisiert werden.

7. Detektionssystem nach einem der vorstehenden Ansprüche,

   wobei die Sendervorrichtung zum Senden der akustischen Signale gemäß mindestens einem vordefinierten Protokoll konfiguriert ist, das aus der Gruppe ausgewählt ist, die aus Folgenden besteht: einem Frequenzsprungprotokoll, einem codierten Impulssignalprotokoll, einem Mehrfrequenz-Signalisierungsprotokoll und einem Reinton-Signalisierungsprotokoll;
und wobei der elektronische Datenprozessor der Empfängervorrichtung ferner zum Filtern der von der Vielzahl von akustischen Wandlern erhaltenen elektrischen Signale unter Verwendung einer Filtercharakteristik konfiguriert ist, die mit dem durch die Sendervorrichtung angewendeten Protokoll übereinstimmt oder diesem entspricht.

**8.** Detektionssystem nach einem der vorstehenden Ansprüche,

wobei der elektronische Datenprozessor ferner zum Bestimmen einer Größe des Lecks basierend auf den gefilterten Signalen konfiguriert ist; und
wobei der elektronische Datenprozessor ferner zum Anzeigen der bestimmten Größe des Lecks oder eines davon abgeleiteten Werts oder Signals konfiguriert ist.

**9.** Detektionssystem nach einem der vorstehenden Ansprüche,

ferner umfassend eine Transportlinie, die zum Bewegen einer Vielzahl von Objekten konfiguriert ist, die eine Oberfläche aufweisen, die auf eine Öffnung getestet werden muss;
wobei eine Sendervorrichtung dazu konfiguriert ist, innerhalb eines der Objekte positioniert zu werden; und
wobei die Vielzahl von akustischen Wandlern stationär angeordnet ist.

**10.** Detektionssystem nach einem der vorstehenden Ansprüche,

wobei die Sendervorrichtung eine Vielzahl von Bändchen-Hochtönern umfasst, die an Kanten eines regelmäßigen Polyeders angeordnet ist;
oder wobei die Sendervorrichtung eine Vielzahl von einzelnen Lautsprechern umfasst, die zum Erzeugen unabhängiger akustischer Signale konfiguriert ist.

**11.** Verfahren zum Bestimmen einer Stelle einer Öffnung einer Oberfläche, wobei das Verfahren die folgenden Schritte umfasst:

a) Bereitstellen einer Sendervorrichtung, die mindestens einen akustischen Sender zum Erzeugen mindestens eines akustischen Signals und einen ersten Funkfrequenz-Sendeempfänger umfasst;
b) Bereitstellen einer Empfängervorrichtung, die Folgendes umfasst:

i) mindestens eine optische Kamera;
ii) eine Vielzahl von akustischen Wandlern, von der jeder zum Empfangen des mindestens einen akustischen Signals und zum Umwandeln des Signals in ein elektrisches Signal konfiguriert ist;
iii) einen elektronischen Datenprozessor, der mit der mindestens einen optischen Kamera verbunden ist und mit der Vielzahl von akustischen Wandlern verbunden ist; und
iv) einen zweiten RF-Sendeempfänger;

c) Positionieren der Sendervorrichtung an einer Seite der Oberfläche und Erzeugen mindestens eines akustischen Signals unter Verwendung des mindestens einen akustischen Senders;
d) Anordnen der Empfängervorrichtung an einer gegenüberliegenden Seite der Oberfläche und Erfassen von Bildinformationen von mindestens einem Abschnitt der Oberfläche unter Verwendung der optischen Kamera und Empfangen elektrischer Signale von der Vielzahl von Wandlern; und Erzeugen eines akustischen Bildes basierend auf den empfangenen elektrischen Signalen; und Erzeugen eines zusammengesetzten Bildes aus dem optischen Bild und dem akustischen Bild,

wodurch eine visuelle Darstellung der Position der Öffnung der Oberfläche erzeugt wird, wobei sich mindestens ein Teil der akustischen Signale durch die Öffnung von der Sendervorrichtung zu der Empfängervorrichtung bewegt hat;
wobei Informationen zwischen der Sendervorrichtung und der Empfängervorrichtung kommuniziert werden, um ein vorbestimmtes Signalprotokoll sowohl in der Sendervorrichtung als auch in der Empfängervorrichtung zu verwenden, wobei das Signalprotokoll ein Synchronisationsprotokoll ist, das zum Bestimmen von Laufzeit- oder Entfernungsparametern verwendet wird, um die Größe des Lecks zu schätzen.

**12.** Verfahren nach Anspruch 11,
ferner umfassend den Schritt des Zeigens des zusammengesetzten Bildes auf einer Anzeige, wodurch die Position der Öffnung der Oberfläche gezeigt wird.

## Revendications

**1.** Système de détection (100, 300, 400 ; 500 ; 600 ; 1500 ; 1600) pour déterminer un emplacement d'une ouverture d'une surface, le système de détection comprenant :

a) un dispositif émetteur (102) comprenant au moins un émetteur acoustique pour générer au moins un signal acoustique ;
b) un dispositif récepteur (104) comprenant :

i) au moins une caméra optique pour capturer des informations d'image ;
ii) une pluralité de transducteurs acoustiques, configurés chacun pour recevoir ledit au moins un signal acoustique et pour convertir ledit signal en un signal électrique ;
iii) un processeur de données électronique connecté à ladite au moins une caméra optique, et configuré pour recevoir lesdites informations d'image, et pour générer une image optique sur la base des informations d'image reçues ;

et connecté à ladite pluralité de transducteurs acoustiques, et configuré pour recevoir ladite pluralité de signaux électriques, et pour générer une image acoustique sur la base des signaux électriques reçus ;
et configuré pour générer une image composite de ladite image optique et de ladite image acoustique, dans lequel l'image composite contient une représentation visuelle de la position de l'ouverture de ladite surface à travers laquelle ouverture au moins une partie des signaux acoustiques sont passés du dispositif émetteur au dispositif récepteur lorsque le dispositif émetteur est situé à un côté de ladite surface, et le dispositif récepteur est situé à un côté opposé de ladite surface ;

**caractérisé en ce que :**

le dispositif émetteur et le dispositif récepteur sont configurés pour émettre et recevoir des signaux acoustiques selon au moins l'un d'un protocole de saut de fréquence, d'un protocole de signal codé, d'un protocole de signal codé par impulsions et d'un protocole de filtrage passe-bande ;
le dispositif émetteur comprend en outre un premier émetteur-récepteur radiofréquence, RF ;
le dispositif récepteur comprend en outre un second émetteur-récepteur RF ; et
le dispositif émetteur et le dispositif récepteur sont configurés pour communiquer des informations afin d'utiliser un protocole de signal prédéterminé à la fois dans le dispositif émetteur et le dispositif récepteur, dans lequel ledit protocole de signal est un protocole de synchronisation utilisé pour déterminer des paramètres de temps de vol ou de distance pour estimer la taille de la fuite.

**2.** Système de détection selon la revendication 1, comprenant en outre au moins un écran connecté ou pouvant être connecté au processeur de données électronique, et configuré pour afficher ladite image composite.

**3.** Système de détection selon la revendication 2, dans lequel l'écran est intégré dans le dispositif récepteur, et dans lequel le dispositif récepteur est une unité portable.

**4.** Système de détection selon l'une quelconque des revendications précédentes,

dans lequel les émetteurs acoustiques sont des émetteurs ultrasonores ; et
dans lequel les signaux acoustiques sont des signaux ultrasonores ; et
dans lequel les transducteurs acoustiques sont des transducteurs ultrasonores.

**5.** Système de détection selon l'une quelconque des revendications précédentes,
dans lequel le dispositif émetteur est configuré pour générer ledit au moins un signal acoustique de manière à avoir une ou plusieurs fréquences dans la plage de fréquences de 20 kHz à 800 kHz.

**6.** Système de détection selon l'une quelconque des revendications précédentes,
dans lequel l'image acoustique, et éventuellement aussi l'image optique, est mise à jour dynamiquement à une fréquence d'au moins 2 Hz.

**7.** Système de détection selon l'une quelconque des revendications précédentes,

dans lequel le dispositif émetteur est configuré pour émettre lesdits signaux acoustiques selon au moins un protocole prédéfini choisi dans le groupe constitué : d'un protocole de saut de fréquence, d'un protocole de signal à impulsions codé, d'un protocole de signalisation multifréquence et d'un protocole de signalisation à tonalité pure ;
et dans lequel le processeur de données électronique du dispositif récepteur est en outre configuré pour filtrer les signaux électriques obtenus à partir de la pluralité de transducteurs acoustiques à l'aide d'une caractéristique de filtre qui répond ou correspond au protocole appliqué par le dispositif émetteur.

**8.** Système de détection selon l'une quelconque des revendications précédentes,

dans lequel le processeur de données électronique est en outre configuré pour déterminer une taille de la fuite sur la base des signaux filtrés ; et
dans lequel le processeur de données électronique est en outre configuré pour afficher la taille déterminée de la fuite, ou une valeur ou un signal dérivé de celle-ci.

**9.** Système de détection selon l'une quelconque des revendications précédentes,

comprenant en outre une ligne de transport configurée pour déplacer une pluralité d'objets ayant une surface qui doit être testée pour une ouverture ;
dans lequel un dispositif émetteur est configuré pour être positionné à l'intérieur de l'un desdits objets ;
et dans lequel la pluralité de transducteurs acoustiques est agencée de manière stationnaire.

**10.** Système de détection selon l'une quelconque des revendications précédentes,

dans lequel le dispositif émetteur comprend une pluralité de tweeters à ruban disposés sur des bords d'un polyèdre régulier ;
ou dans lequel le dispositif émetteur comprend une pluralité de haut-parleurs individuels configurés pour générer des signaux acoustiques indépendants.

**11.** Procédé de déterminer un emplacement d'une ouverture d'une surface, le procédé comprenant les étapes suivantes :

a) fournir un dispositif émetteur comprenant au moins un émetteur acoustique pour générer au moins un signal acoustique et un premier émetteur-récepteur radiofréquence ;
b) fournir un dispositif récepteur comprenant :

i) au moins une caméra optique ;
ii) une pluralité de transducteurs acoustiques, configurés chacun pour recevoir ledit au moins un signal acoustique et pour convertir ledit signal en un signal électrique ;
iii) un processeur de données électronique connecté à ladite au moins une caméra optique, et connecté à ladite pluralité de transducteurs acoustiques ; et
iv) un second émetteur-récepteur RF ;

c) positionner le dispositif émetteur à un côté de la surface, et générer au moins un signal acoustique à l'aide dudit au moins un émetteur acoustique ;
d) disposer le dispositif récepteur à un côté opposé de la surface, et capturer des informations d'image d'au moins une partie de la surface à l'aide de la caméra optique, et recevoir des signaux électriques à partir de la pluralité de transducteurs ; et générer une image acoustique sur la base des signaux électriques reçus ; et générer une image composite de ladite image optique et de ladite image acoustique,

générer ainsi une représentation visuelle de la position de l'ouverture de ladite surface à travers laquelle ouverture au moins une partie des signaux acoustiques sont passés du dispositif émetteur au dispositif récepteur ;
dans lequel des informations sont communiquées entre le dispositif émetteur et le dispositif récepteur afin d'utiliser un protocole de signal prédéterminé à la fois dans le dispositif émetteur et le dispositif récepteur, dans lequel ledit protocole de signal est un protocole de synchronisation utilisé pour déterminer des paramètres de temps de vol ou de distance pour estimer la taille de la fuite.

**12.** Procédé selon la revendication 11,
comprenant en outre l'étape consistant à montrer l'image composite sur un écran, montrant ainsi la position de l'ouverture de la surface.

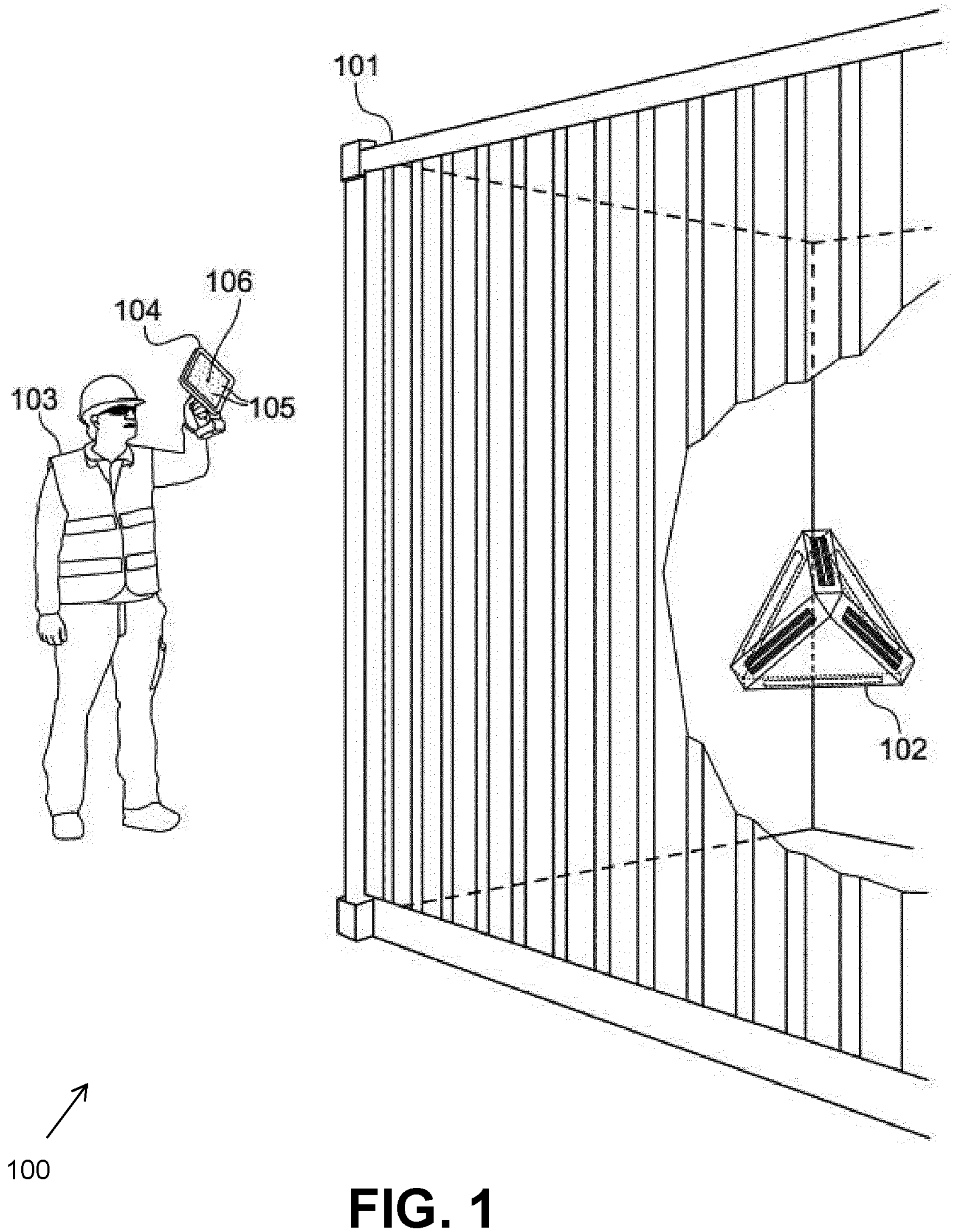


FIG. 1

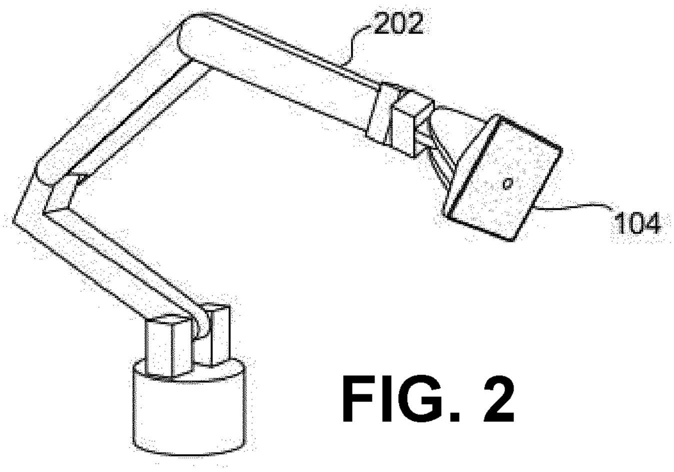


FIG. 2

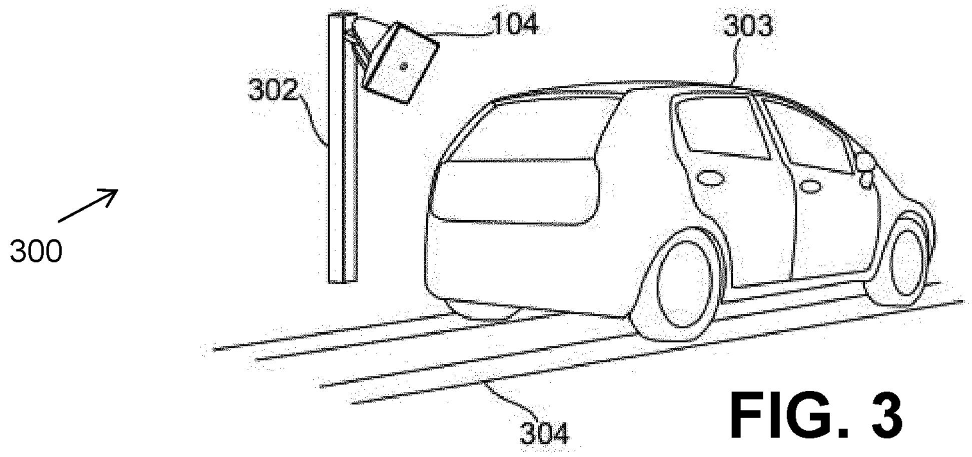


FIG. 3

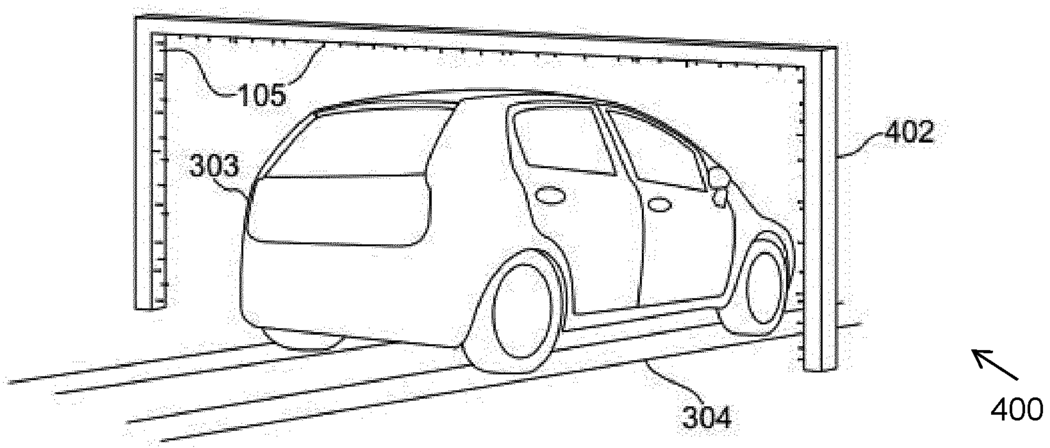


FIG. 4

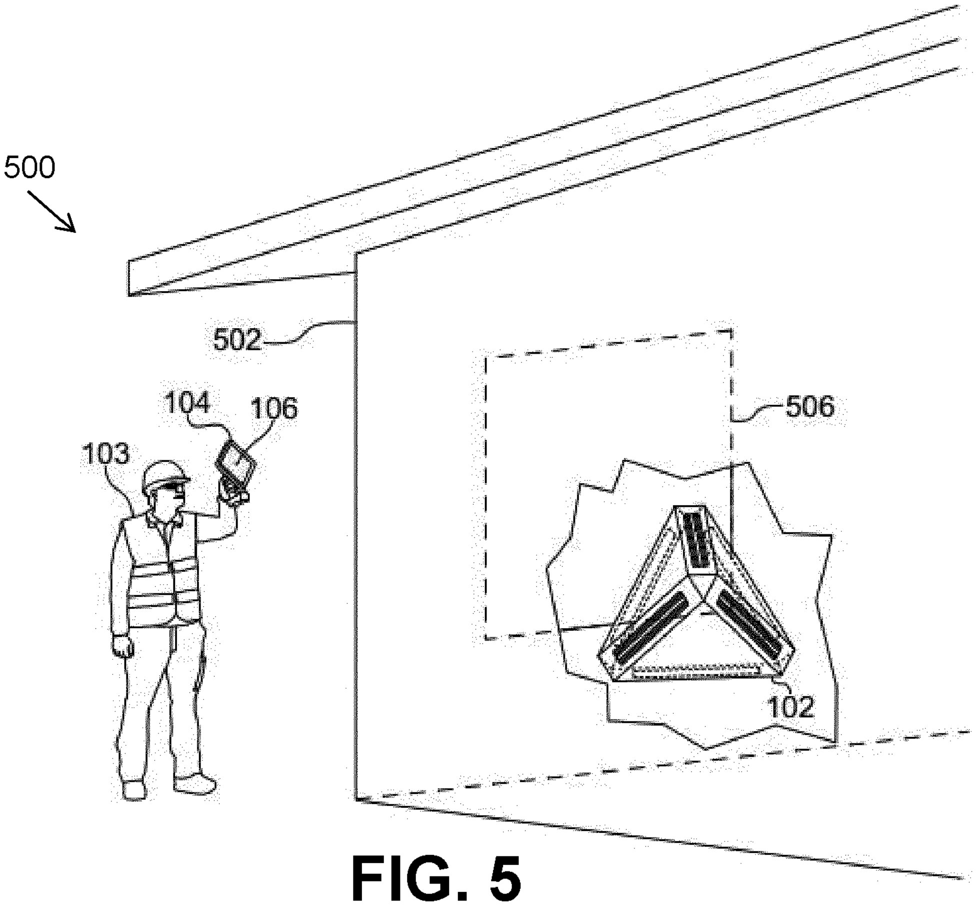


FIG. 5

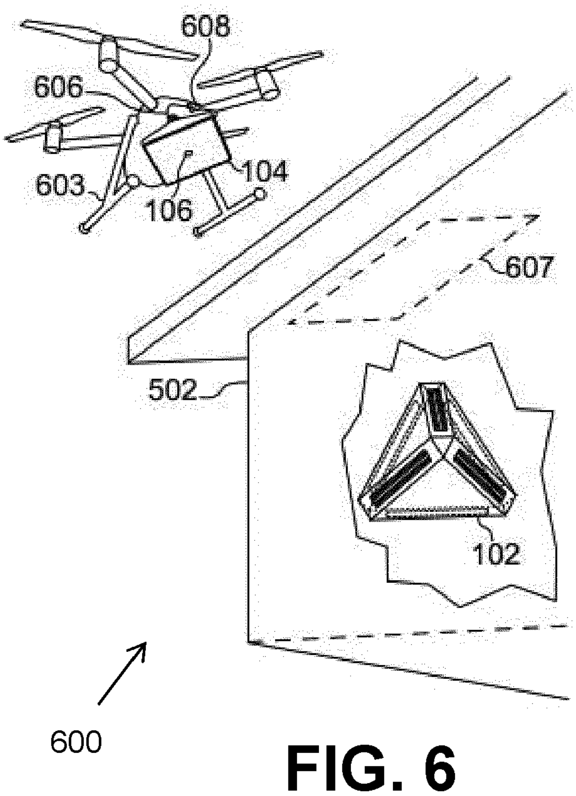


FIG. 6

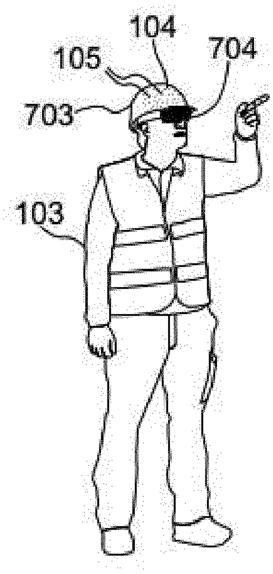


FIG. 7

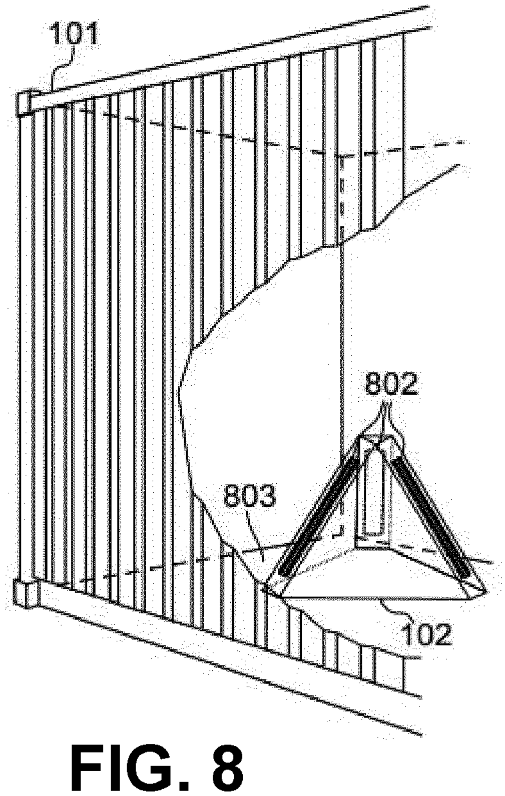


FIG. 8

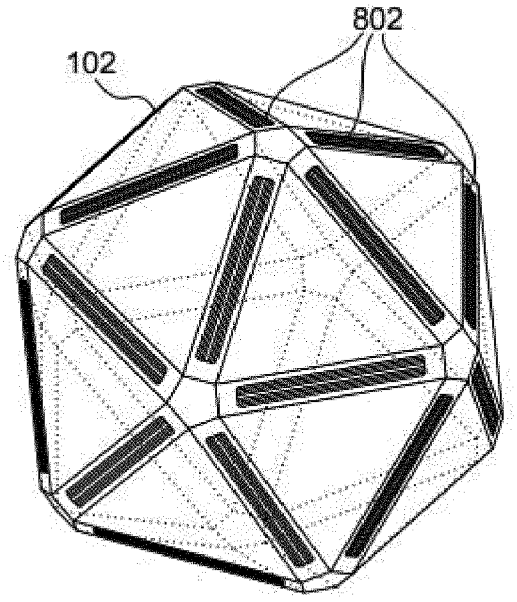


FIG. 9

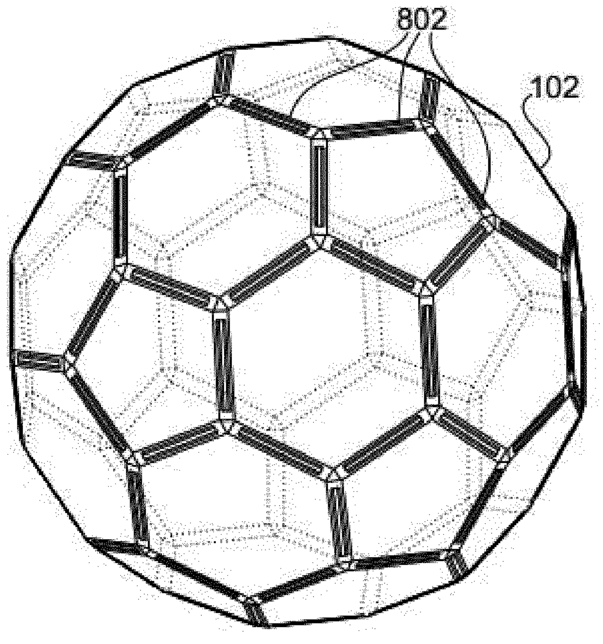


FIG. 10

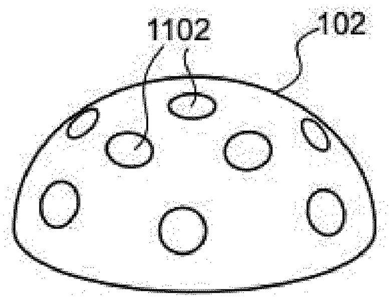


FIG. 11

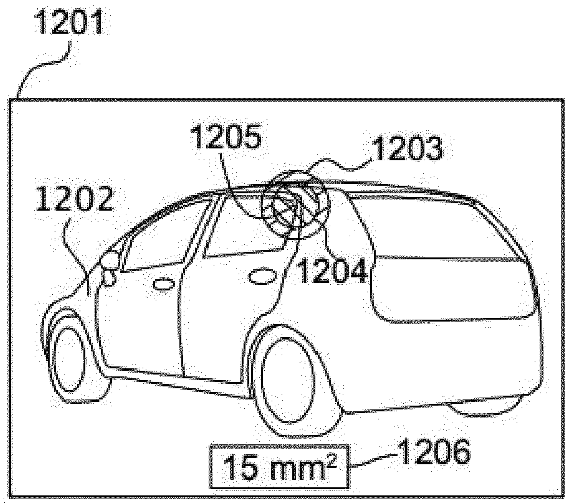


FIG. 12

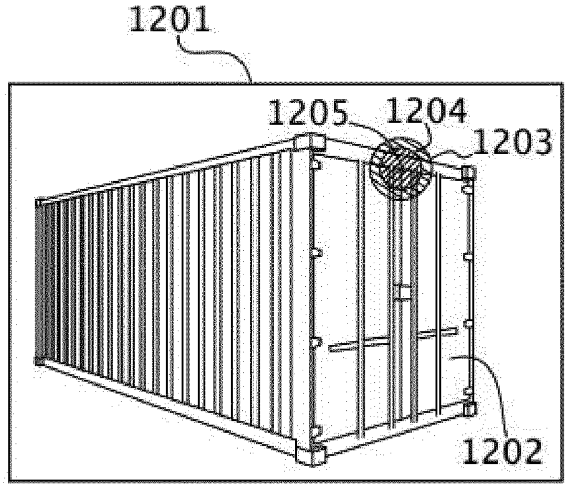


FIG. 13

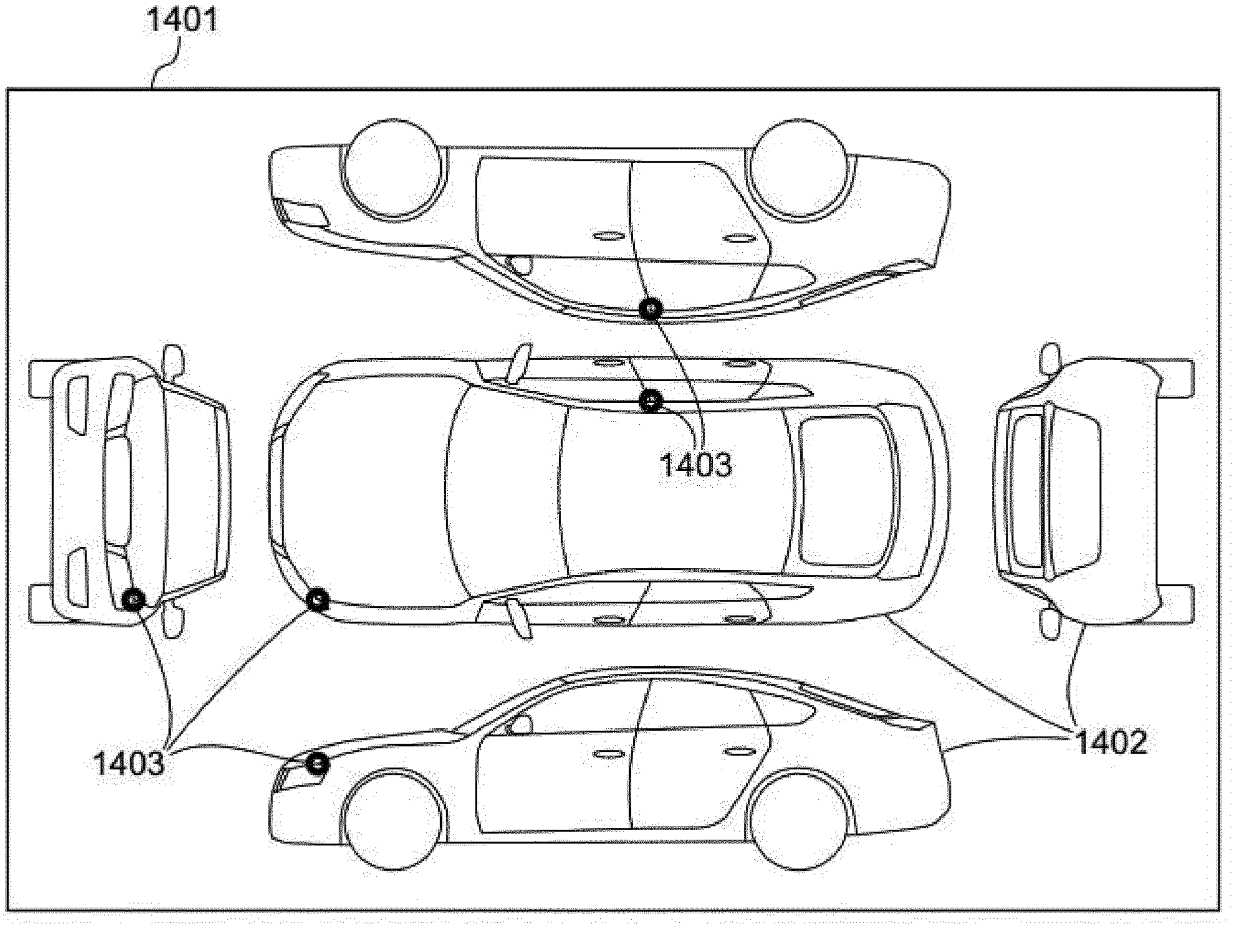


FIG. 14

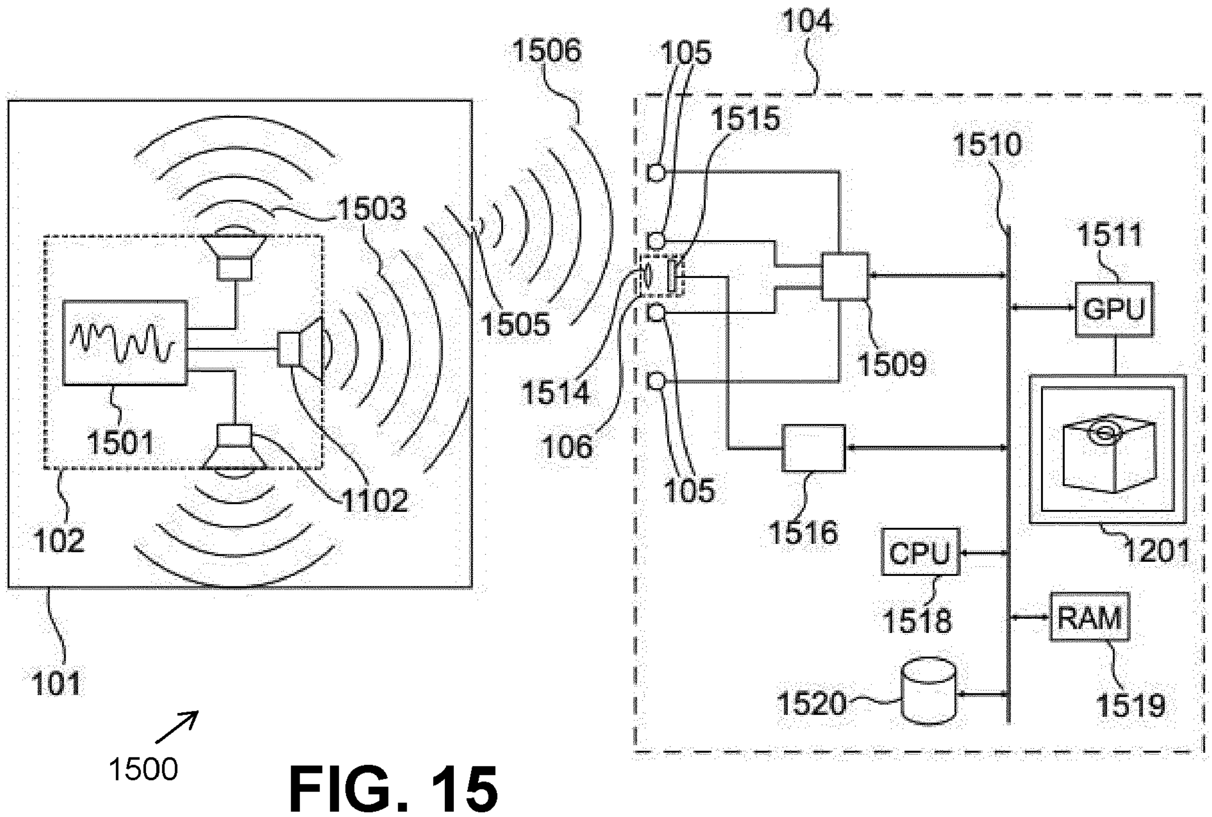
1506
105
104
1515
1510
1503
1511
GPU
1505
1509
1514
106
1501
1102
105
1516
1201
102
CPU
1518
RAM
1519
1520
101
1500

FIG. 15

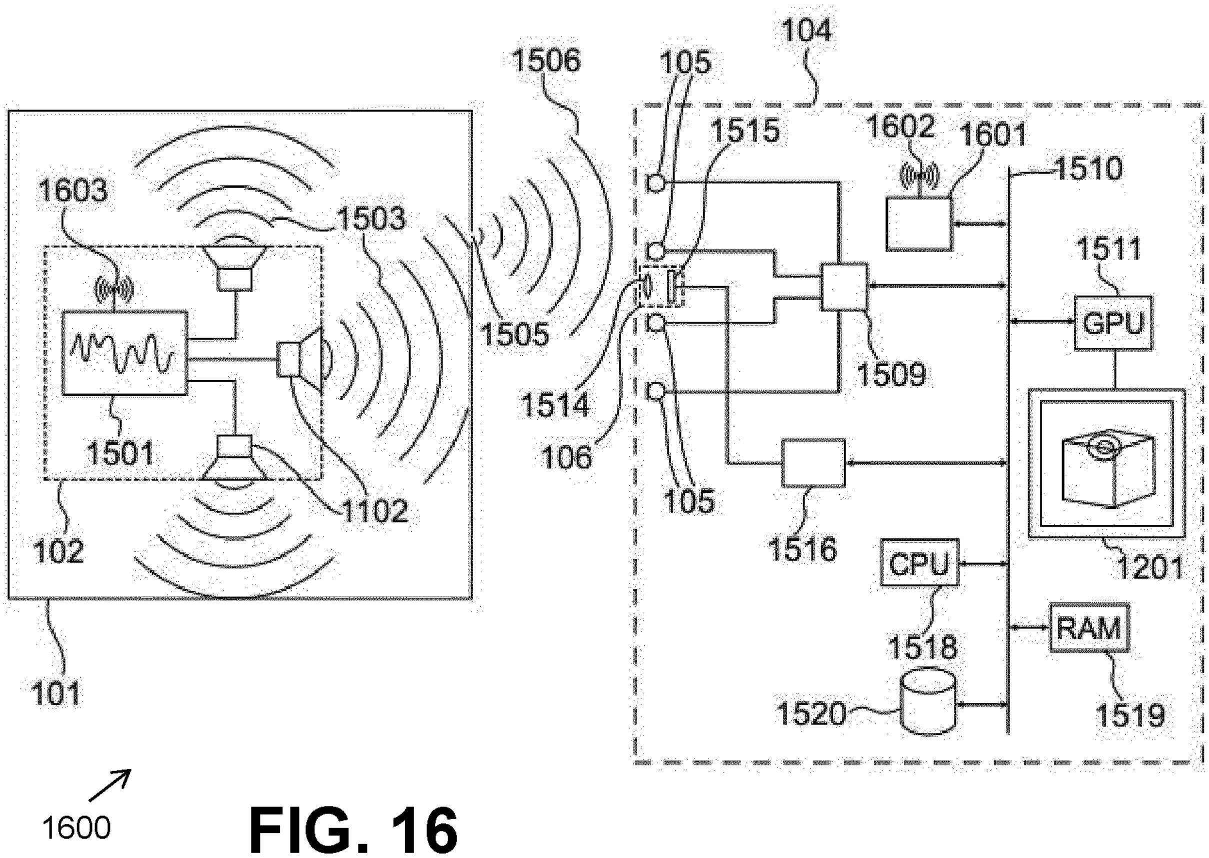
1506
105
104
1515
1602
1601
1510
1603
1503
1511
GPU
1505
1509
1514
106
1501
1102
105
1516
1201
102
CPU
1518
RAM
1520
1519
101
1600

FIG. 16

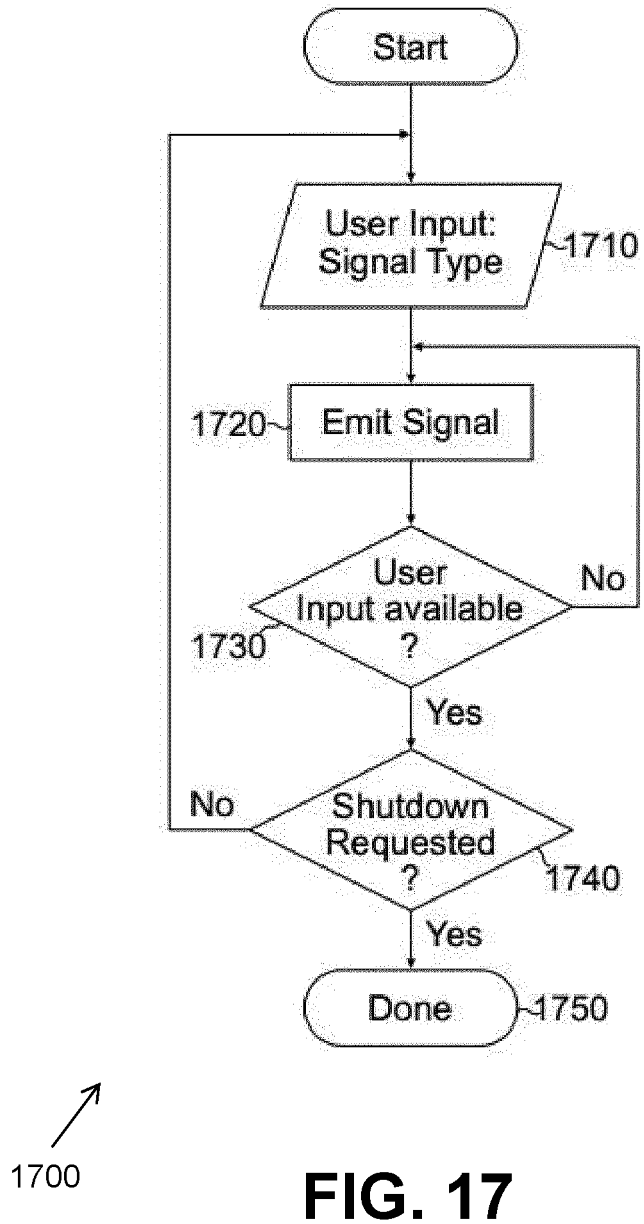
Start
User Input:
Signal Type
1710
1720
Emit Signal
User
Input available
?
1730
No
Yes
No
Shutdown
Requested
?
1740
Yes
Done
1750
1700

FIG. 17

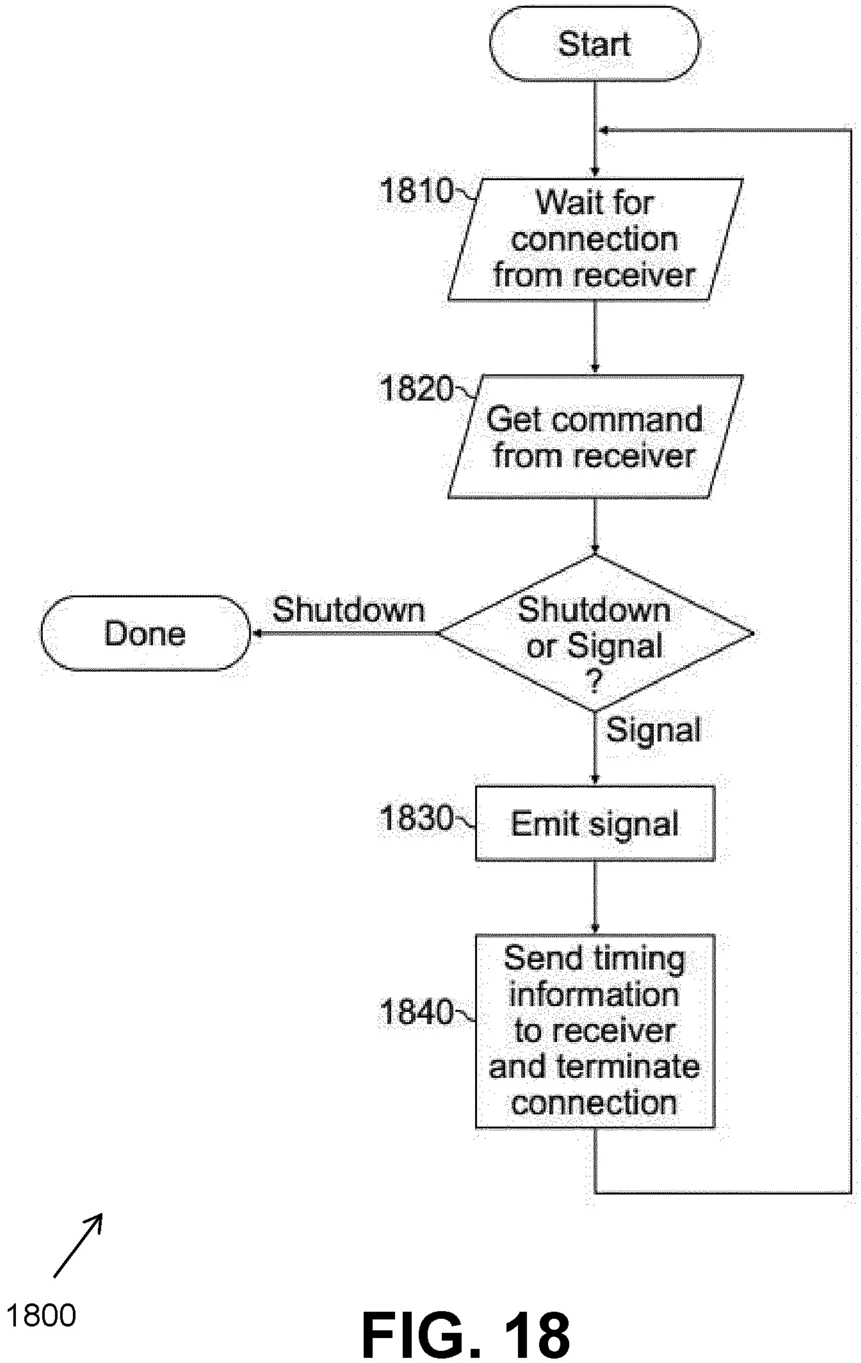
Start
1810
Wait for connection from receiver
1820
Get command from receiver
Shutdown or Signal ?
Shutdown
Done
Signal
1830
Emit signal
1840
Send timing information to receiver and terminate connection
1800

FIG. 18

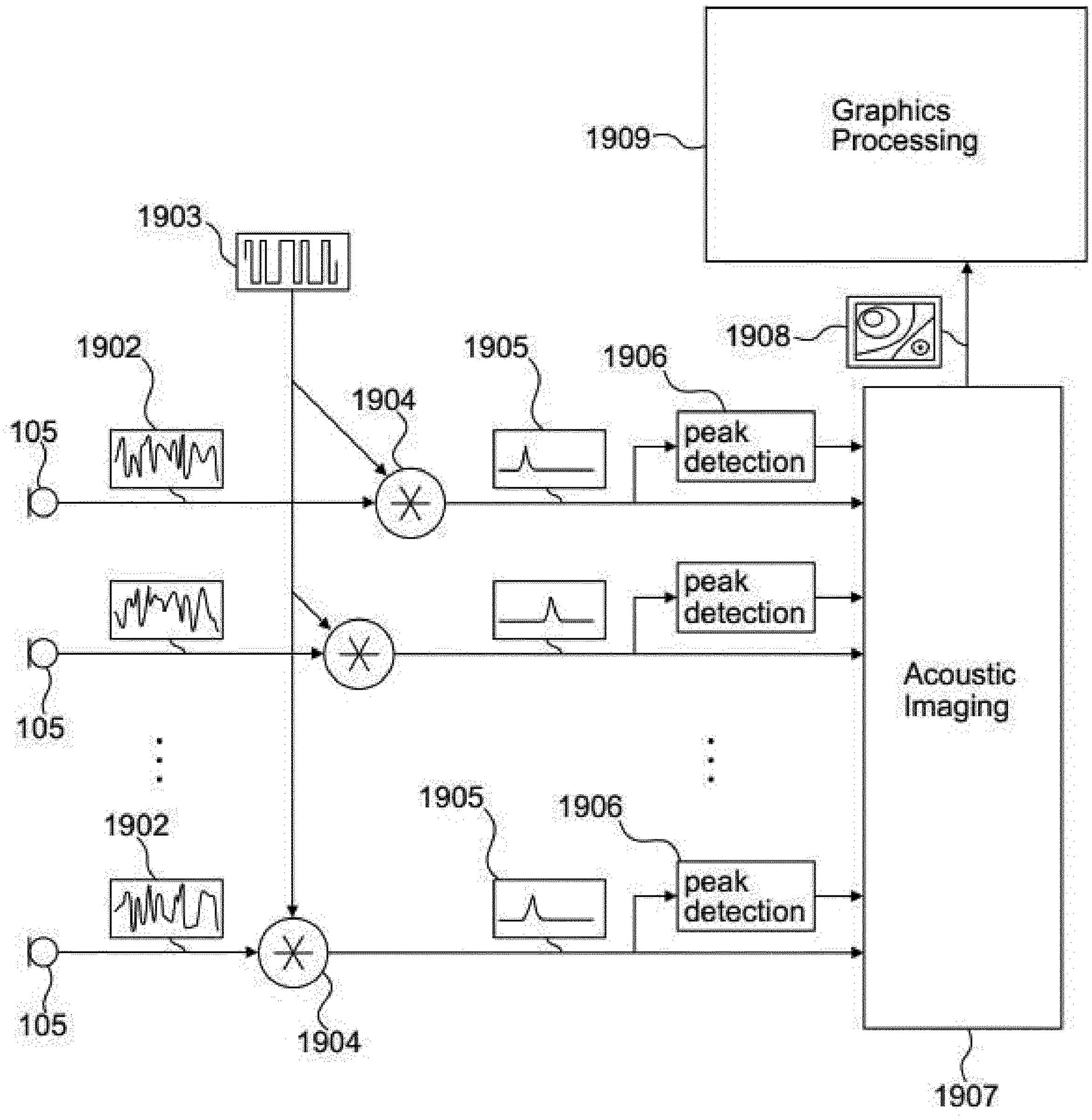
Graphics
Processing
1909
1903
1902
1905
1906
1908
1904
105
peak
detection
peak
detection
Acoustic
Imaging
105
1902
1905
1906
peak
detection
105
1904
1907

FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5780723 A